(19) Europäisches Patentamt
European Patent Office
Office européen des brevets

(11) **EP 1 724 548 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(51) Int Cl.:
*G01D 5/347* (2006.01)     *G01D 5/36* (2006.01)

(21) Anmeldenummer: **06008168.4**

(22) Anmeldetag: **20.04.2006**

(54) **Positionsmessgerät**

Position measuring device

Appareil de mesure de position

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.05.2005 DE 102005023984**

(43) Veröffentlichungstag der Anmeldung:
**22.11.2006 Patentblatt 2006/47**

(73) Patentinhaber: **Dr. Johannes Heidenhain GmbH 83292 Traunreut (DE)**

(72) Erfinder:
• **Holzapfel, Wolfgang 83119 Obing (DE)**

• **Drescher, Jörg 83083 Riedering (DE)**
• **Linnemann, Udo 83365 Nußdorf (DE)**

(74) Vertreter: **Pleyer, Hans Anno Dr. Johannes Heidenhain GmbH Patentabteilung Postfach 12 60 D-83292 Traunreut (DE)**

(56) Entgegenhaltungen:
**EP-A1- 0 237 470       EP-A2- 0 082 441
EP-A2- 0 287 214       EP-A2- 0 896 206
DE-A- 3 542 514        US-A- 4 527 056**

EP 1 724 548 B1

**Beschreibung**

Die Erfindung betrifft ein Positionsmessgerät nach Anspruch 1.

In vielen Gebieten der Technik dienen Positionsmessgeräte zur exakten Positionierung von Maschinenteilen. Meist weist die Maschine mit dem zu positionierenden Teil eine Führung auf, die eine ausgedehnte Bewegung in einer Richtung erlaubt, die im Folgenden als Führungsrichtung bzw. Messrichtung bezeichnet werden soll. Solche Führungen haben quer zur Führungsrichtung gewisse Toleranzen, die Bewegungen quer zur Führungsrichtung erlauben. Die Erfassung und ggf. die Korrektur solcher Bewegungen quer zur Führungsrichtung ist in manchen Anwendungen von Bedeutung. Es sind dann Positionsmessgeräte gefordert, die eine Positionsmessung nicht nur in der eigentlichen, ausgedehnten Messrichtung erlauben, sondern auch in einer Abweichungsrichtung quer zur Messrichtung. Da mit der Messung in Abweichungsrichtung nur solche Bewegungen erfasst werden sollen, die keinen Beitrag zur Messrichtung leisten, stehen die Abweichungsrichtung und die Messrichtung aufeinander senkrecht. Im Falle linearer Bewegungen ist dies anschaulich klar, im Falle einer rotatorischen Messrichtung (also einer Winkelmessung) kann die interessierende Abweichungsrichtung radial oder axial sein.

Positionsmessgeräte der hier beschriebenen Art basieren auf der Abtastung von in Messrichtung periodischen Strukturen (der Inkrementalteilung) auf einem Maßstab. Dabei werden periodische Messsignale erzeugt. Zählt man die Perioden, so erhält man ein Maß für die Verschiebung. Mit einer Referenzmarke wird eine bestimmte Periode als Referenzposition gekennzeichnet, von der aus durch Zählung der Perioden eine absolute Position in Einheiten einer Periodenlänge ermittelt werden kann. Durch Interpolation innerhalb einer Periode kann die Position noch deutlich feiner Aufgelöst werden. Üblicherweise werden zwei um 90 Grad gegeneinander phasenverschobene, sinusförmige Messsignale erzeugt, da so neben der einfachen Interpolierbarkeit auch eine Richtungserkennung möglich ist.

Die DE 4132942 C2 beschreibt Positionsmessgeräte für zwei aufeinander senkrecht stehende Messrichtungen, das sich grundsätzlich zur Messung in einer Messrichtung und einer Abweichungsrichtung eignet. In Anwendungen, die keine kontrollierte Bewegungen in Abweichungsrichtung erlauben (1 D-Kinematik), ist eine sichere Erfassung der Referenzmarke zur Bestimmung der absoluten Position in Abweichungsrichtung nicht möglich. Die in Abweichungsrichtung erhaltenen Messsignale sind zudem bei den zu erwartenden geringfügigen Bewegungen in Abweichungsrichtung nahezu statisch und einer dynamischen Korrektur während der Messung nicht zugänglich.

Die EP 287214 A2 beschreibt ein Positionsmessgerät, mit dem einerseits die Winkellage eines Schaftes in Messrichtung erfasst werden kann, und andererseits axiale Bewegungen des Schaftes gemessen werden können. Die zur Positionsbestimmung in Messrichtung verwendete Inkrementalteilung weist Strukturen senkrecht zur Messrichtung auf, während die Strukturen der Inkrementalteilung für die Positionsbestimmung in Abweichungsrichtung schräg zur Messrichtung und zur Abweichungsrichtung angeordnet sind. Dadurch erhält man ein periodisches Messsignal für die Abweichungsrichtung, auch wenn nur eine Bewegung in Messrichtung vorliegt. Die Phasenbeziehung dieses Messsignals zum Signal der Abtastung der Winkellagenspur wird als Maß für den axialen Versatz des Schaftes verwendet. Die Positionsbestimmung in axialer Richtung ist damit nicht besonders genau.

Die DE 3542514 C2, von der die Erfindung ausgeht, beschreibt ein Positionsmessgerät mit einer Inkrementalspur zur Erfassung der Position in Messrichtung und einer Geradheitsspur in Form einer weiteren Inkrementalspur zur Erfassung der Position in Abweichungsrichtung. Die Strukturen der Inkrementalspuren stehen jeweils senkrecht zu Messrichtung bzw. Abweichungsrichtung. Es ist eine Referenzmarke offenbart, die eine Bestimmung der absoluten Position in Abweichungsrichtung ermöglicht, auch wenn keine kontrollierte Bewegung in Abweichungsrichtung möglich ist. Dies wird durch eine sowohl zur Messrichtung als auch zur Abweichungsrichtung schräg gestellte Struktur erreicht. Die in Abweichungsrichtung von der Geradheitsspur abgetasteten Messsignale sind bei den zu erwartenden geringen Bewegungen in Abweichungsrichtung nahezu statisch und einer dynamischen Korrektur während der Messung nicht zugänglich.

Aufgabe der Erfindung ist es, ein Positionsmessgerät zu schaffen, das eine genaue Positionsbestimmung sowohl in einer Messrichtung als auch in einer Abweichungsrichtung ermöglicht.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird ein Positionsmessgerät mit einem Maßstab und einem Abtastkopf beschrieben, deren Relativlage in einer Messrichtung und einer Abweichungsrichtung durch Abtastung von Inkrementalteilungen in Form einer Messspur und einer Geradheitsspur auf dem Maßstab und durch Erzeugung von periodischen Messsignalen in einer Auswertelektronik, sowie durch das Zählen von Signalperioden der periodischen Messsignale erfassbar ist. Die Geradheitsspur zur Erfassung der Position in Abweichungsrichtung umfasst dabei Strukturen, die schräg zur Abweichungsrichtung und schräg zur Messrichtung angeordnet sind.

Durch diese Anordnung wird erreicht, dass bei einer Bewegung ausschließlich in Messrichtung periodische Messsignale für die Abweichungsrichtung erzeugt werden. Dies ermöglicht erst eine Echtzeitkompensation der periodischen Messsignale hinsichtlich deren Phasenlage, Amplitude und Nullpunktsverschiebung. So ist auch in Abweichungsrichtung eine sehr genaue Positionserfassung möglich.

Besonders vorteilhaft lässt sich die Erfindung an Maschinen einsetzen, die eine 1 D-Kinematik (also aktive Bewegbarkeit einer Achse in der Führungsrichtung) oder eine 1D+ - Kinematik aufweisen (zusätzlich eine aktive Bewegbarkeit um einen kleinen Betrag in einer Richtung senkrecht zur Führungsrichtung, z.B. um Führungsfehler auszugleichen).

Weitere Vorteile sowie Einzelheiten der vorliegenden Erfindung ergeben sich aus der nachfolgenden Beschreibung bevorzugter Ausführungsformen anhand der Figuren. Dabei zeigt

Figur 1      den prinzipiellen Aufbau eines Positionsmessgerätes,

Figur 2      eine erste Kombination aus Maßstab und Abtastkopf,

Figur 3      eine zweite Kombination aus Maßstab und Abtastkopf,

Figur 4      eine dritte Kombination aus Maßstab und Abtastkopf.

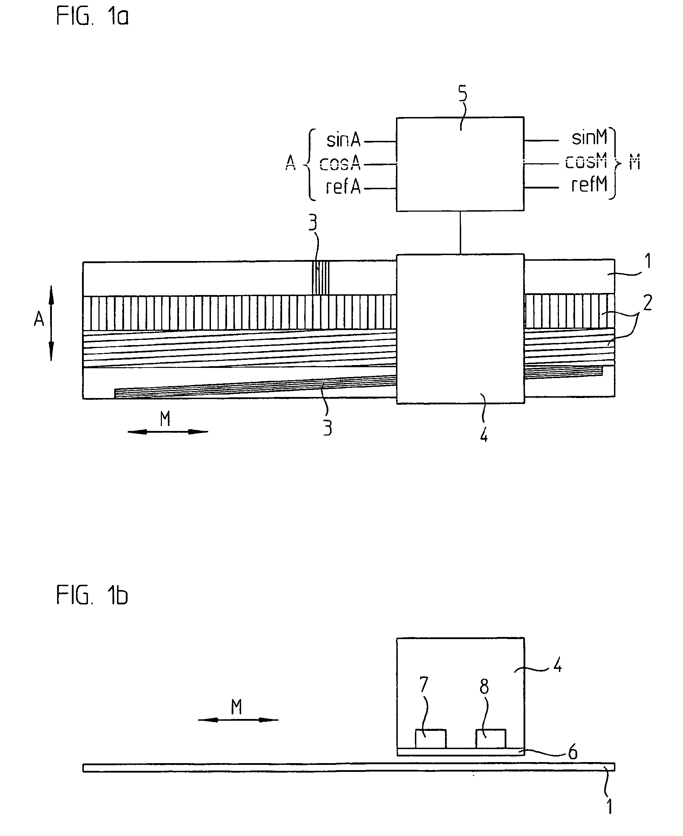

In Figur 1a ist zunächst der prinzipielle Aufbau eines Positionsmessgerätes dargestellt. Das Positionsmessgerät weist einen Maßstab 1 und einen Abtastkopf 4 auf. Bei geeigneter Montage dieser beiden Elemente an einer Maschine (z.B. Maßstab 1 an einer Führung, Abtastkopf 4 am geführten Maschinenteil) liegt die Messaufgabe in der Bestimmung der Relativlage von Maßstab 1 und Abtastkopf 4. Das Positionsmessgerät weist eine Messrichtung M auf, die im Beispiel der Führungsrichtung entspricht. In manchen Applikationen müssen auch Abweichungen quer zu dieser Messrichtung erfasst und evtl. ausgeglichen werden. Diese Abweichungen in Abweichungsrichtung A stehen senkrecht auf der Messrichtung M.

Der Maßstab 1 weist zunächst zwei Inkrementalspuren 2 auf. Deren im Messrichtung M bzw. Abweichungsrichtung A periodische Strukturen erlauben das Zählen von Positionsinkrementen in der jeweiligen Richtung. Um auch die Absolutposition ermitteln zu können, ist jeder Inkrementalspur 2 eine Referenzmarke 3 zugeordnet.

Der Abtastkopf 4 bildet aus der Abtastung der periodischen Strukturen der Inkrementalteilungen 2 mehrere periodische Signale, die in einer Auswertelektronik 5 weiter verarbeitet werden. Letztlich werden dabei pro Richtung M, A zwei um 90 Grad gegeneinander phasenverschobene, sinusförmige Signale sinM, cosM, sinA, cosA erzeugt, die mittelbar oder unmittelbar die Relativposition durch Zählen und Interpolieren von Signalperioden angeben. Aus der Abtastung der Referenzmarken 3 wird außerdem für jede Richtung M, A ein Referenzimpuls refM, refA erzeugt, der jeweils einer speziellen Signalperiode der periodischen Signale sinM, cosM bzw. sinA, cosA zugeordnet ist. So lässt sich nach Überfahren einer Referenzmarke 3 und durch Zählen der Signalperioden in einer nicht dargestellten Zählerschaltung eine Absolutposition in der jeweiligen Richtung M, A angeben, die deutlich genauer ist als eine Periode der jeweils abgetasteten Inkrementalspur. Sowohl die Auswertelektronik 5 als auch die Zählerschaltung können in den Abtastkopf 4 integriert sein.

Figur 1b ist eine Seitenansicht der Figur 1a und stellt schematisch ein optisches Positionsmessgerät dar. Der Abtastkopf 4 enthält eine Lichtquelle 7 und Photodetektoren 8. Licht der Lichtquelle 7 fällt auf den Maßstab 1 und wird von den Inkrementalteilungen 2 und Referenzmarken 3 reflektiert. Über eine Abtastplatte 6, die der Abtastung des bei der Reflexion erzeugten Lichtmusters dient, fällt das Licht auf die Photodetektoren 8. Die Ausführung des Positionsmessgerätes als auf optischer Abtastung von reflektierenden Maßstabsstrukturen basierend ist bevorzugt, aber nicht für die Erfindung notwendig. Ebenso können erfindungsgemäße Positionsmessgeräte auf optisch transmittierenden Maßstabsstrukturen, sowie auf anderen Abtastprinzipien mit magnetischen, kapazitiven, induktiven und sonstigen periodischen Strukturen beruhen.

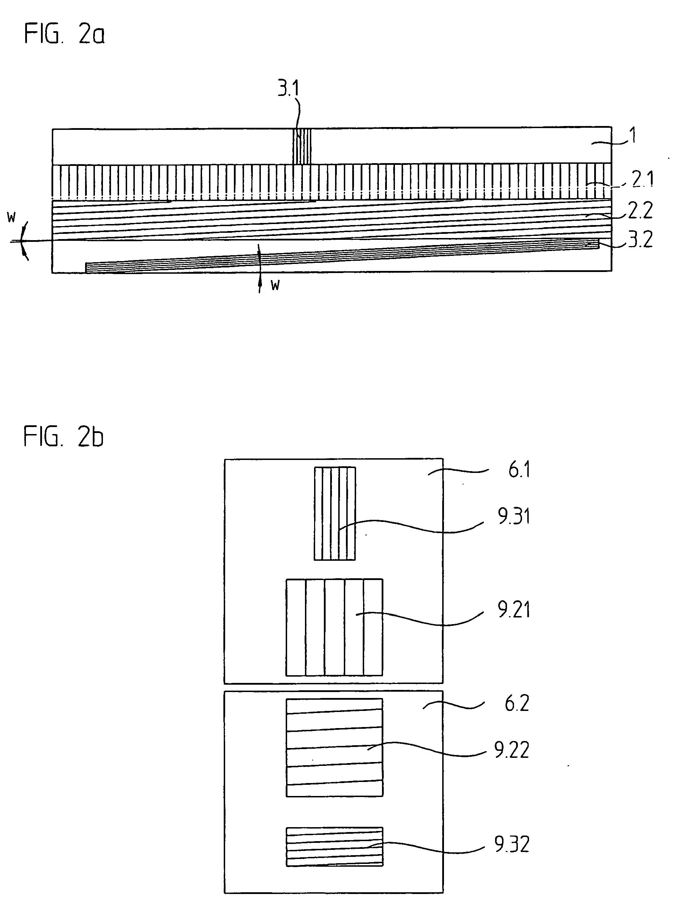

Figur 2a zeigt ein erstes, besonders bevorzugtes Ausführungsbeispiel der Erfindung. Der Maßstab 1 trägt eine erste Inkrementalteilung in Form einer Messspur 2.1. Deren Strukturen in Form von abwechselnd reflektierenden und nicht reflektierenden Strichen sind senkrecht zur Messrichtung M ausgedehnt und in Messrichtung M mit einer sehr feinen Periode von wenigen Mikrometern hintereinander angeordnet. Vorzugsweise liegt die Periode in einem Bereich kleiner 200 Mikrometer. In Strichrichtung versetzt neben der Messspur 2.1 befindet sich eine Referenzmarke 3.1, die so ausgebildet ist, dass deren Lage in Messrichtung M genau einer Periode der Messspur 2.1 zugeordnet werden kann. Solche Referenzmarken sind im Stand der Technik hinlänglich bekannt und müssen hier nicht näher beschrieben werden. Die Strukturen der Referenzmarke 3.1 sind ebenfalls senkrecht zur Messrichtung M ausgerichtet.

Auf dem Maßstab 1 befindet sich weiter eine zweite Inkrementalteilung in Form einer Geradheitsspur 2.2. Diese Geradheitsspur dient dazu, Abweichungen der Relativbewegung von der Messrichtung M zu erfassen, also in einer Abweichungsrichtung A senkrecht zur Messrichtung M. Die Strukturen der Geradheitsspur 2.2 bestehen aus mit feiner Periode von wenigen Mikrometern hintereinander angeordneten, abwechselnd reflektierenden und nicht reflektierenden Strichen. Die Striche stehen aber nun nicht senkrecht auf der Abweichungsrichtung A bzw. parallel zur Messrichtung M, sondern sind um einen Winkel w gegen die Messrichtung M verkippt. Sie sind damit schräg zur Messrichtung M und schräg zur Abweichungsrichtung A angeordnet. Der Begriff "schräg" soll in diesem Sinne eine von 0 Grad bzw.

90 Grad oder auch von einer parallelen bzw. senkrechten Anordnung unter Bezug auf die Messrichtung M bzw. Abweichungsrichtung A abweichende Richtung beschreiben. Der Winkel w sei hier der Betrag des Kippwinkels zwischen 0 und 90 Grad, denn die Kipprichtung spielt keine Rolle. Zur geeigneten Wahl des Winkel w wird unten mehr ausgeführt.

Der Maßstab 1 trägt in Abweichungsrichtung A versetzt zur Geradheitsspur 2.2 eine Referenzmarke 3.2, die so ausgebildet ist, dass deren Lage in Abweichungsrichtung A genau einer Periode der Geradheitsspur 2.2 zugeordnet werden kann. Die Strukturen dieser Referenzmarke 3.2 sind ebenfalls um den Winkel w gegenüber der Messrichtung M verkippt. Dadurch wird sichergestellt, dass die Referenzmarke 3.2 durch eine relative Verschiebung von Maßstab 1 und Abtastkopf 4 in Messrichtung M erfasst und somit eine Absolutposition in Abweichungsrichtung A ermittelt werden kann. Die Referenzmarke 3.2 muss hierzu in Abweichungsrichtung A eine Ausdehnung aufweisen, die der Summe aus der möglichen Abweichung der Führung und der für das Positionsmessgerät spezifizierten Anbautoleranz in Abweichungsrichtung A entspricht. Nur dann ist eine sichere Erfassung der Referenzmarke 3.2 gewährleistet. Durch die Verkippung der Strukturen der Referenzmarke 3.2 und der Geradheitsspur 2.2 um den gleichen Winkel w ist sichergestellt, dass der Abstand der Referenzmarke 3.2 zur zugeordneten Periode der Geradheitsspur immer gleich bleibt. Dadurch kann die Referenzmarke an beliebiger Stelle abgetastet werden.

Es bleibt zu erwähnen, dass nicht eine Verkippung der Geradheitsspur 2.2 oder der Referenzmarke 3.2 als ganzes wichtig ist, sondern eine Verkippung der Strukturen innerhalb dieser Elemente. In Figur 1a erkennt man den Unterschied: Die Geradheitsspur 2.2 als Ganzes bzw. deren Begrenzung ist parallel zur Messrichtung M ausgerichtet, nur die Striche innerhalb der Geradheitsspur 2.2 sind um den Winkel w verkippt. Durch die parallele Ausrichtung der äußeren Begrenzung der Geradheitsspur 2.2 zur Messrichtung M wird bewirkt, dass der Abtastort des Abtastkopfes 4 bei einer Relativbewegung entlang der Messrichtung M mittig auf der Geradheitsspur 2.2 bleibt und nicht seitlich verschoben wird. Dadurch erhält man maximale Anbautoleranzen für den Abtastkopf 4 und den Maßstab 1.

Die Länge LR der Referenzmarke 3.2 der Geradheitsspur 2.2 in Messrichtung M muss ausreichen, um bei allen zugelassenen Montagetoleranzen des Abtastkopfes 4 relativ zum Maßstab 1 ein sicheres Überfahren der Referenzmarke 3.2 zu gewährleisten. Wenn diese Montagetoleranz in Abweichungsrichtung A eine obere Grenze (Spezifikation) von ΔY erreicht, so gilt für die Länge LR

$$LR > \Delta Y / \tan(w).$$

Figur 2b zeigt die dem Maßstab 1 zugewandte Seite des Abtastkopfes 4, und damit die Abtastplatte 6, die sich hier aus zwei Teilen 6.1 und 6.2 zusammensetzt, und die zum Maßstab 1 der Figur 2a passt. Die Abtastplatte 6 trägt mehrere Abtastfelder 9. Abtastfeld 9.31 ist der Referenzmarke 3.1 der Messrichtung M zugeordnet, Abtastfeld 9.21 ist der Messspur 2.1 zugeordnet, Abtastfeld 9.22 ist der Geradheitsspur 2.2 zugeordnet und Abtastfeld 9.32 ist der Referenzmarke 3.2 der Abweichungsrichtung A zugeordnet. Nach dem Anbau des Maßstabes 1 und des Abtastkopfes 4 sind die Strukturen in den Abtastfeldern 9 parallel zu den Strukturen in den jeweils zugeordneten Spuren 2 bzw. Referenzmarken 3. Die Strukturen in den Abtastfeldern 9 tasten die vom Maßstab 1 her einfallenden Lichtmuster ab und lassen je nach Relativlage zwischen Maßstab 1 und Abtastkopf 4 mehr oder weniger Licht auf in Lichtrichtung hinter den Abtastfeldern 9 angeordnete Photodetektoren 8 fallen. Die von den Photodetektoren 8 erzeugten und an die Auswertelektronik 5 geleiteten Signale sind damit eine periodische Funktion der Relativlage.

Dank der Schrägstellung der Strukturen der Geradheitsspur 2.2 erhält man bei einer Relativbewegung nur in Messrichtung M auch von der Geradheitsspur 2.2 periodische Signale. Damit ist es erst möglich, diese Signale einer Echtzeitkompensation hinsichtlich deren Phasenlage, Amplitude und Nullpunktsverschiebung zu unterwerfen, und damit sehr genaue periodische Signale sinA, cosA in der Auswertelektronik zu erzeugen. Die Schrägstellung muss aber natürlich auch bei der Positionsauswertung berücksichtigt werden: Die Relativposition in Abweichungsrichtung A kann nicht allein durch Zählen der periodischen Signale sinA, cosA ermittelt werden. Es muss vielmehr auch die Relativposition in Messrichtung M mit betrachtet werden. Die Relativpositionen ergeben sich wie folgt:

$$X = X'$$

$$Y = Y' * \cos(w) - X' * \sin(w)$$

X' ist die Relativlage, die durch Zählen der Perioden in Messrichtung M ermittelt wurde und stimmt hier mit der wahren Relativlage X überein. Y' ist die Relativlage, die durch Zählen der Perioden in Abweichungsrichtung A ermittelt wurde. Diese muss korrigiert werden, um die wahre Relativlage Y in Abweichungsrichtung A zu erhalten. Man erkennt, dass diese nicht unabhängig von der Relativlage in Messrichtung M ist.

Die Echtzeitkompensation der periodischen Signale sinM, cosM, sinA, cosA bedeutet anschaulich, dass bei Darstellung von einem sin/cos - Paar in einem rechtwinkligen Koordinatensystem ein Kreis um den Ursprung entstehen soll. Ohne Echtzeitkompensation erhielte man durch lokale Unregelmäßigkeiten des Maßstabes 1 bzw. seiner Inkrementalteilungen 2 Ellipsen mit beliebiger Ausrichtung der Hauptachse, deren Schwerpunkt nicht im Ursprung des Koordinatensystems läge. Die Ellipsenparameter wären dabei Ortsabhängig. Durch die Echtzeitkompensation kann diese Ortsabhängigkeit deutlich reduziert und eine annähernde Kreisform erzwungen und damit die Genauigkeit der Bestimmung der Position innerhalb einer Signalperiode gesteigert werden. Die für die Echtzeitkompensation erforderliche Schaltung kann Teil der Auswertelektronik 5 sein.

Für eine Echtzeitkompensation von periodischen Signalen sind Daten erforderlich, die aus der Abtastung von jeweils wenigstens einer Signalperiode stammen. Die hierfür erforderliche Relativbewegung des Abtastkopfes 4 zum Maßstab 1 in Messrichtung M sei die Kompensationslänge KL. Im Falle der Messspur 2.1 entspricht die Kompensationslänge KL gerade der Periodenlänge der Strukturen der Messspur 2.1.

In Abweichungsrichtung A ist dies nicht der Fall, hier gilt

$$KL = SP / \sin(w),$$

wobei SP die Periode der Geradheitsspur 2.2 senkrecht zur Ausrichtung der Teilungsstriche der Geradheitsspur 2.2 ist. Man erkennt, dass sich für w = 0, also eine nicht verkippte Geradheitsspur eine unendliche Kompensationslänge KL ergibt - eine Echtzeitkompensation wäre also nicht möglich.

Eine sinnvolle Kompensationslänge KL sollte vorzugsweise kleiner oder gleich der halben effektiven Abtastlänge LA eines Positionsmessgerätes sein. Bei einem optischen Positionsmessgerät ist diese effektive Abtastlänge LA etwa der Querschnitt des Lichtstrahles, der die Inkrementalspur abtastet. Damit ergibt sich:

$$\sin(w) >= 2 * SP / LA.$$

Ein typischer Querschnitt eines Lichistrahies zur Abtastung der Inkrementalteilung liegt bei etwa 2 Millimetern. Für eine Geradheitsspur 2.2 mit SP = 3 Mikrometer lässt sich so ein sinnvoller Bereich für den Winkel w ableiten: Der Winkel w sollte wenigstens 3 mrad betragen.

Der Winkel w kann aber durchaus sehr viel größer gewählt werden. Ein Winkel von 45 Grad kann vorteilhaft sein, wenn eine sehr kurze Kompensationslänge KL benötigt wird, etwa weil sich die Teilungseigenschaften auf dem Maßstab 1 über recht kleine Bereiche stark ändern. Da sich auch durch mechanische Toleranzen bei der Montage und in der Führung des Abtastkopfes 4 entlang des Maßstabes 1 eine Verkippung der Teilungsstrukturen relativ zur eigentlichen Messrichtung M bzw. Abweichungsrichtung A ergeben kann, muss der Winkel w größer als diese Toleranzen gewählt werden, so dass sich auch unter maximaler Ausnutzung der Toleranzen eine hinreichende Kompensationslänge KL ergibt. Dies bedeutet, dass zu dem berechneten Winkel w für ein ohne Toleranzen angebautes Positionsmessgerät der Winkel der maximalen Winkeltoleranz addiert werden muss.

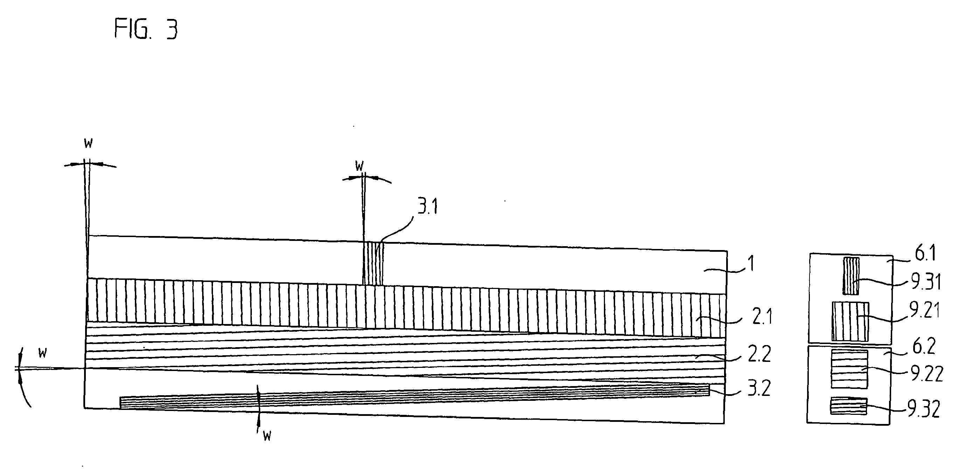

Die Figur 3 zeigt ein leicht modifiziertes zweites Ausführungsbeispiel. Im Unterschied zur Figur 2a, b sind nun auch die Strukturen der Messspur 2.1 und der zugeordneten Referenzmarke 3.1 um den gleichen Winkel w verkippt wie die Strukturen der Geradheitsspur 2.2 und deren Referenzmarke 3.2. Entsprechendes gilt für die Strukturen in den Abtastfeldern 9 der Abtastplatte 6. Vorteilhaft an dieser Ausführungsform ist, dass sie sich durch einen um den Winkel w zur Messrichtung M verkippten Anbau eines Maßstabes 1 und eines Abtastkopfes 4 verwirklichen lässt, deren Strukturen parallel und senkrecht zu den Kanten des Maßstabes 1 bzw. des Abtastkopfes 4 verlaufen. Wichtig für die Erfindung ist lediglich die Schrägstellung der Strukturen der Geradheitsspur 2.2, um periodische Signale aus deren Abtastung zu erhalten, wenn eine Relativbewegung nur in Messrichtung M stattfindet. Die gleichzeitige Schrägstellung der Strukturen der Messspur 2.1 stört dabei nicht, muss aber für eine genaue Positionsbestimmung berücksichtigt werden:

$$X = X' * \cos(w) + Y' * \sin(w)$$

$$Y = Y' * \cos(w) - X' * \sin(w)$$

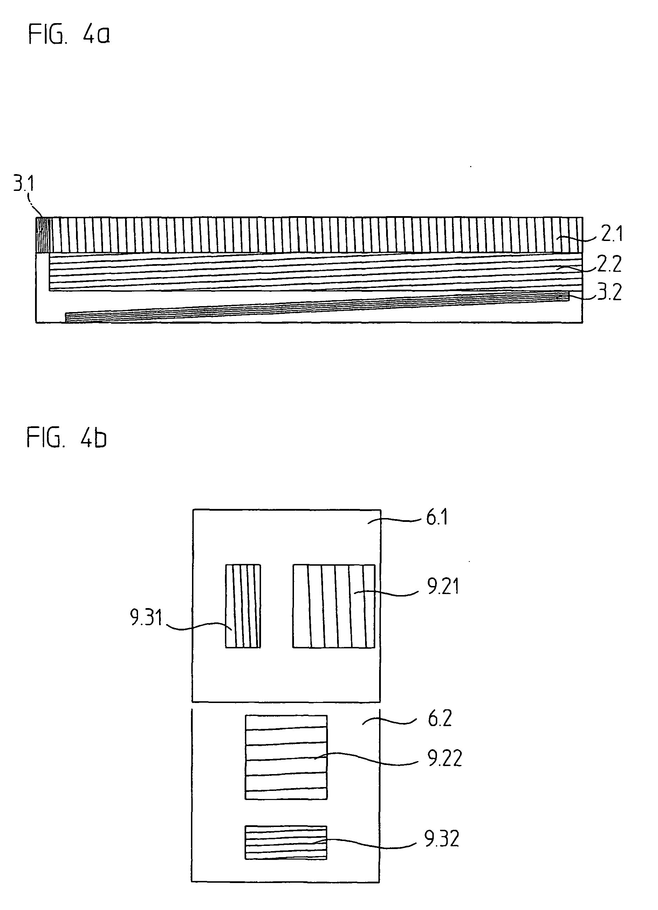

Das dritte Ausführungsbeispiel der Figur 4a/b unterscheidet sich vom zweiten Ausführungsbeispiel lediglich in der Positionierung der der Messspur 2.1 zugeordneten Referenzmarke 3.1. Diese sitzt nun in Messrichtung M versetzt zur Messspur 2.1, wodurch sich ein quer zur Messrichtung M weniger ausgedehnter Maßstab 1 realisieren lässt. Zudem können die Abtastplatten 6.1 und 6.2 nun identisch ausgeführt werden und müssen lediglich um 90 Grad gegeneinander verdreht am Abtastkopf 4 befestigt werden. Die Abtastung kann aber auch durch zwei identische Abtastköpfe 4 erfolgen, die jeweils nur eine Richtung erfassen und um 90 Grad gedreht angebaut sind. In beiden Fällen wird die Herstellung vereinfacht.

Grundsätzlich lassen sich zur Realisierung der Erfindung die Referenzmarken 3.1 und 3.2 recht beliebig anordnen. Auch den Inkrementalspuren 2.1 und 2.2 überlagerte Referenzmarken 3.1 und 3.2 sind durchaus möglich. Dabei könnten sogar beide Referenzmarken 3.1, 3.2 in nur eine der beiden Inkrementalspuren 2.1, 2.2 integriert werden.

Die Erfindung lässt sich außerdem auch dadurch realisieren, dass die Messspur 2.1 und die Geradheitsspur 2.2 übereinander angeordnet werden, in dem die Strukturen der beiden Spuren übereinander geschoben werden. Es entstehen dadurch Strukturen ähnlich einem Kreuzgitter.

Weiter ist die Erfindung auch nicht auf lineare Positionsmessgeräte eingeschränkt. Die Messrichtung M kann auch rotatorisch sein. Der einfachere Fall ist der, dass als Abweichungsrichtung A axiale Bewegungen überwacht werden sollen. Dies lässt sich einfach mit Maßstabstrukturen bewerkstelligen, wie sie oben beschrieben wurden, und die auf eine Zylinderfläche gewickelt sind.

Sollen Abweichungen in radialer Abweichungsrichtung A überwacht werden, so besteht die Geradheitsspur 2.2 nicht wie im Stand der Technik üblich aus zur Drehachse konzentrischen Kreisen, sondern aus einer Spirale mit konstanter Phasensteigung. Eine solche Spirale entfernt sich pro Umdrehung um immer gleiche Stücke von der Drehachse. Diese konstante Steigung entspricht dem Kippwinkel w.

**Patentansprüche**

1. Positionsmessgerät mit einem Maßstab (1) und einem Abtastkopf (4), deren Relativlage in einer Messrichtung (M) und einer Abweichungsrichtung (A) durch Abtastung von Inkrementalteilungen (2.1, 2.2) in Form einer Messspur (2.1) und einer Geradheitsspur (2.2) auf dem Maßstab (1) und durch Erzeugung von zwei sinusförmige, um 90 Grad phasenverschobenen periodischen Messsignalen (sinM, cosM) für die Messrichtung und zwei sinusförmigen, um 90 Grad phasenverschobenen Messsignalen (sinA, cosA) für die Abweichungsrichtung in einer Auswertelektronik (5) sowie durch Zählen von Signalperioden der periodischen Messsignale (sinM, cosM, sinA, cosA) erfassbar ist, **dadurch gekennzeichnet, dass** die Geradheitsspur (2.2) zur Erfassung der Position in Abweichungsrichtung (A) Strukturen umfasst, die unter einem Winkel (w) schräg zur Abweichungsrichtung (A) und schräg zur Messrichtung (M) angeordnet sind.

2. Positionsmessgerät nach Anspruch 1, **dadurch gekennzeichnet, dass** die Strukturen der Geradheitsspur (2.2) zur Erfassung der Relativlage in Abweichungsrichtung (A) so angeordnet sind, dass bei einer Bewegung ausschließlich in Messrichtung (M) periodische Messsignale (sinA, cosA) für die Abweichungsrichtung (A) erzeugt werden.

3. Positionsmessgerät nach Anspruch 1 oder 2, **dadurch gekennzeichnet, dass** die Begrenzung der Geradheitsspur (2.2) parallel zur Messrichtung (M) ausgerichtet ist.

4. Positionsmessgerät nach einem der vorhergehenden Ansprüche, **dadurch gekennzeichnet, dass** der Sinus des Winkels (w) größer oder gleich einer doppelten Signalperiode (SP) der Strukturen der Geradheitsspur (2.2) geteilt durch eine effektive Abtastlänge (LA) des Positionsmessgerätes ist.

5. Positionsmessgerät nach einem der vorhergehenden Ansprüche, **dadurch gekennzeichnet, dass** den Inkrementalteilungen (2.1, 2.2) wenigstens eine Referenzmarke (3.1, 3.2) zugeordnet ist, die die Erfassung einer absoluten Position zumindest in Abweichungsrichtung (A) ermöglicht, und wobei die Referenzmarke (3.2) zur Erfassung der absoluten Position in Abweichungsrichtung (A) Strukturen umfasst, die schräg zur Abweichungsrichtung (A) und schräg zur Messrichtung (M) angeordnet sind.

6. Positionsmessgerät nach Anspruch 5, **dadurch gekennzeichnet, dass** die Strukturen der Referenzmarke (3.2) und die Strukturen der Geradheitsspur (2.2) um den gleichen Winkel (w) gegen die Messrichtung (M) verkippt sind.

7. Positionsmessgerät nach Anspruch 6, **dadurch gekennzeichnet, dass** die Länge der Referenzmarke (3.2) der Geradheitsspur (2.2) in Messrichtung (M) größer ist als eine Montagetoleranz des Abtastkopfes (4) relativ zum Maßstab (1) quer zur Messrichtung (M) geteilt durch den Tangens des Winkels (w).

8. Positionsmessgerät nach einem der vorhergehenden Ansprüche, **dadurch gekennzeichnet, dass** die periodischen Messsignale (sinM, cosM) aus der Abtastung der Messspur (2.1) in der Auswertelektronik (5) einer Echtzeitkompensation hinsichtlich wenigstens einem der Parameter Phasenverschiebung, Amplitude und Nulllage unterworfen sind.

9. Positionsmessgerät nach einem der vorhergehenden Ansprüche, **dadurch gekennzeichnet, dass** die periodischen Messsignale (sinA, cosA) aus der Abtastung der Geradheitsspur (2.1) in der Auswertelektronik (5) einer Echtzeitkompensation hinsichtlich wenigstens einem der Parameter Phasenverschiebung, Amplitude und Nulllage unterworfen sind.

10. Positionsmessgerät nach einem der vorhergehenden Ansprüche, **dadurch gekennzeichnet, dass** der Abtastkopf (4) wenigstens eine Lichtquelle (7), mehrere Photodetektoren (8) und eine Abtastplatte (6) aufweist, die mit strukturierten Abtastfeldern (9.21, 9.22, 9.31, 9.32) versehen sind, deren Strukturen parallel zu den jeweils abgetasteten Strukturen der Inkrementalteilungen (2.1, 2.2) bzw. Referenzmarken (3.1, 3.2) sind.

**Claims**

1. A position measuring device comprising a measuring stick (1) and a sensing head (4), the relative position of which can be detected in a measuring direction (M) and in a direction of deviation (A) by scanning incremental scales (2.1, 2.2) in the form of a measurement track (2.1) and a linearity track (2.2) on the gauge (1) and by creating two sinusoidal periodic measuring signals (sinM, cosM), which are shifted by 90 degrees, for the measuring direction and two sinusoidal measuring signals (sinA, cosA), which are shifted by 90 degrees, for the direction of deviation in an analytical electronics (5) as well as by counting signal periods of the periodic measuring signals (sinM, cosM, sinA, cosA), **characterized in that** the linearity track (2.2) comprises structures for detecting the position in the direction of deviation (A), said structures being arranged under an angle (w) so as to be beveled to the direction of deviation (A) and so as to be beveled to the measuring direction (M).

2. The position measuring device according to claim 1, **characterized in that** the structures of the linearity track (2.2) are arranged in such a manner for detecting the relative position in the direction of deviation (A) that periodic measuring signals (sinA, cosA) are generated for the direction of deviation (A) only in the measuring direction (M) in response to a movement.

3. The position measuring device according to claim 1 or 2, **characterized in that** the limitation of the linearity track (2.2) is aligned so as to be parallel to the measuring direction (M).

4. The position measuring device according to one of the preceding claims, **characterized in that** the sine of the angle (w) is greater or equal to a double signal period (SP) of the structures of the linearity track (2.2), divided by an effective scanning length (LA) of the position measuring device.

5. The position measuring device according to one of the preceding claims, **characterized in that** at least one reference mark (3.1, 3.2) is assigned to the incremental scales (2.1, 2.2), said reference mark (3.2) enabling the detection of an absolute position at least in the direction of deviation (A) and wherein the reference mark (3.2) comprises structures for detecting the absolute position in the direction of deviation (A), said structures being arranged so as to be beveled to the direction of deviation (A) and so as to be beveled to the measuring direction (M).

6. The position measuring device according to claim 5, **characterized in that** the structures of the reference mark (3.2) and the structures of the linearity track (2.2) are tilted about the same angle (w) contrary to the measuring direction (M).

7. The position measuring device according to claim 6, **characterized in that** the length of the reference mark (3.2) of the linearity track (2.2) in measuring direction is greater than an assembly tolerance of the scanning head (4) relative to the gauge (1) at right angles to the measuring direction (M) divided by the tangent of the angle (w).

8. The position measuring device according to one of the preceding claims, **characterized in that** the periodic measuring signals (sinM, cosM) from the scanning of the measuring track (2.1) in the analytical electronics (5) are subjected to a real time compensation with reference to at least one of the parameters phase shift, amplitude and dead center position.

9. The position measuring device according to one of the preceding claims, **characterized in that** the periodic measuring signals (sinA, cosA) from the scanning of the linearity track (2.2) in the analytical electronics (5) are subjected to a real time compensation with reference to at least one of the parameters phase shift, amplitude and dead center position.

10. The position measuring device according to one of the preceding claims, **characterized in that** the scanning head (4) encompasses at least one light source (7), a plurality of light sensors (8) and a scanning plate (6), which are provided with structured scanning fields (9.21, 9.22, 9.31, 9.32), the structures of which are parallel to the respectively scanned structures of the incremental scales (2.1, 2.2) and reference marks (3.1, 3.2), respectively.

**Revendications**

1. Appareil de mesure de position, avec une échelle (1) et une tête exploratrice (4) dont la situation relative dans une direction de mesure (M) et une direction de déviation (A) peut être détectée par balayage de divisions incrémentales (2.1, 2.2) sous la forme d'une trace de mesure (2.1) et d'une trace de rectitude (2.2) sur l'échelle (1), par la production de deux signaux de mesure périodiques (sinM, cosM) en forme de sinus et décalés en phase de 90° pour la direction de mesure, et deux signaux de mesure (sinA, cosA) en forme de sinus et décalés en phase de 90° pour la direction de déviation, dans une unité électronique d'interprétation (5), ainsi que par comptage des périodes de signaux des signaux de mesure périodiques (sinM, cosM, sinA, cosA), **caractérisé en ce que** la trace de rectitude (2.2) pour la détection de la position dans la direction de déviation (A) comprend des structures disposées en biais par rapport à la direction de déviation (A) et en biais par rapport à la direction de mesure (M), en formant un angle (w).

2. Appareil de mesure de position selon la revendication 1, **caractérisé en ce que** les structures de la trace de rectitude (2.2) pour la détection d'une position relative dans la direction de déviation (A) sont disposées de telle manière, que lors d'un mouvement exclusivement dans la direction de mesure (M), des signaux de mesure périodiques (sinA, cosA) sont produits pour la direction de déviation (A).

3. Appareil de mesure de position selon la revendication 1 ou 2, **caractérisé en ce que** la délimitation de la trace de rectitude (2.2) est orientée parallèlement à la direction de mesure (M).

4. Appareil de mesure de position selon l'une des revendications précédentes, **caractérisé en ce que** le sinus de l'angle (w) est supérieur ou égal à une double période de signaux. (SP) des structures de la trace de rectitude (2.2), divisé par une longueur de détection effective (LA) de l'appareil de mesure de position.

5. Appareil de mesure de position selon l'une des revendications précédentes, **caractérisé en ce qu'**au moins une marque de référence (3.1, 3.2) est attribuée aux divisions incrémentales (2.1, 2.2) pour permettre la détection d'une position absolue au moins dans la direction de déviation (A), et dans lequel la marque de référence (3.2) pour la détection de la position absolue dans la direction de déviation (A) comprend des structures disposées en biais par rapport à la direction de déviation (A) et à la direction de mesure (M).

6. Appareil de mesure de position selon la revendication 5, **caractérisé en ce que** les structures de la marque de référence (3.2) et les structures de la trace de rectitude (2.2) sont inclinées d'un angle identique (w) contre la direction de mesure (M).

7. Appareil de mesure de position selon la revendication 6, **caractérisé en ce que** la longueur de la marque de référence (3.2) de la trace de rectitude (2.2) dans la direction de mesure (M) est supérieure à une tolérance de montage de la tête exploratrice (4) par rapport à l'échelle (1) transversalement à la direction de mesure (M), divisé par la tangente de l'angle (w).

8. Appareil de mesure de position selon l'une des revendications précédentes, **caractérisé en ce que** les signaux de mesure périodiques (sinM, cosM) issus de l'exploration de la trace de mesure (2.1) dans l'unité électronique d'interprétation (5) sont soumis à une compensation en temps réel, au moins pour ce qui est des paramètres du décalage de phase, de l'amplitude et de la position zéro.

9. Appareil de mesure de position selon l'une des revendications précédentes, **caractérisé en ce que** les signaux de mesure périodiques (sinA, cosA) issus de l'exploration de la trace de rectitude (2.2) dans l'unité électronique d'interprétation (5) sont soumis à une compensation en temps réel, au moins pour ce qui est des paramètres du décalage de phase, de l'amplitude et de la position zéro.

10. Appareil de mesure de position selon l'une des revendications précédentes, **caractérisé en ce que** la tête exploratrice (4) comporte au moins une source de lumière (7), plusieurs photodétecteurs (8) ainsi qu'une plaque d'exploration (6) pourvue de champs de détection structurés (9.21, 9.22, 9.31, 9.32), dont les structures parallèles aux différentes structures explorées des divisions incrémentales (2.1, 2.2) ou des marques de référence (3.1, 3.2).

FIG. 1a

$A \begin{cases} sinA \\ cosA \\ refA \end{cases}$  5  $\begin{cases} sinM \\ cosM \\ refM \end{cases} M$

FIG. 1b

FIG. 2a

3.1

1

2.1

2.2

3.2

W

W

FIG. 2b

6.1

9.31

9.21

6.2

9.22

9.32

FIG. 3

EP 1 724 548 B1

EP 1 724 548 B1

FIG. 4a

3.1

2.1
2.2
3.2

FIG. 4b

6.1
9.21
9.31
6.2
9.22
9.32

12

**IN DER BESCHREIBUNG AUFGEFÜHRTE DOKUMENTE**

**In der Beschreibung aufgeführte Patentdokumente**

- DE 4132942 C2
- EP 287214 A2
- DE 3542514 C2